# EUROPÄISCHE PATENTANMELDUNG

(11) **EP 2 260 746 A1**
(43) Veröffentlichungstag der Anmeldung: **15.12.2010**
(21) Anmeldenummer: 10000335.9
(22) Anmeldetag: 15.01.2010
(51) Int. Cl.: A47J 36/02, A21B 3/13, B65D 81/34

(54) **Backschale für Lebensmittel insbesondere Backwaren**

(30) Priorität: 13.06.2009 DE 102009024734
(71) Anmelder: Brinker, Karl, 44629 Herne (DE)
(72) Erfinder: Brinker, Karl, 44629 Herne (DE)
(74) Vertreter: COHAUSZ DAWIDOWICZ HANNIG & SOZIEN

(57) **Zusammenfassung**

Die Erfindung betrifft eine Backschale (Backtray) zur Aufnahme von insbesondere tiefgefrorenen Lebensmitteln wie Backwaren zum Backen oder Fertigbacken in einem Ofen, wobei der Boden der Backschale mindestens zwei Teile bildet, die im verpackten Zustand übereinander liegen und hierbei die Backwaren tragen.

## Beschreibung

Die Erfindung betrifft eine Backschale (Backtray) zur Aufnahme von insbesondere tiefgefrorenen Lebensmitteln wie Backwaren zum Backen oder Fertigbacken in einem Ofen.

Es ist üblich, Backwaren auf ein mit Backpapier belegtes Backblech zu legen und mit dem Backblech in einen vorgeheizten Ofen zu schieben, um ein Ankleben des Backgutes zu verhindern. Damit erübrigt sich ein Einfetten des Backblechs, aber Backpapier ist nicht immer zur Hand.

Es ist bereits bekannt, ein Baguette in einer Backschale aus Pappe in einer Mikrowelle aufzubacken. Diese bekannten Backschalen vergrößern den Innenraum einer Verpackung erheblich, so dass das verpackte Produkt viel Platz beansprucht.

Aufgabe der Erfindung ist es, eine Backschale zu schaffen, die im verpackten Zustand wenig Platz benötigt und im ausgepackten Zustand eine große Schalenbodenfläche zur Verfügung stellt, auf der zwei oder mehr Backwarenteile wie kleine Blätterteigtaschen oder Brötchen in genügendem Abstand voneinander gelegt und aufgebacken werden können.

Diese Aufgabe wird erfindungsgemäß dadurch gelöst, dass der Boden der Backschale mindestens zwei Teile bildet, die im verpackten Zustand übereinander liegen und hierbei die Backwaren tragen. Hierbei bilden die zwei oder mehr Teile der Backschale voneinander getrennte Teile, deren Trennungslinie(n) den Boden durchquert/durchqueren, oder die Teile der Backschale über Faltlinien miteinander verbunden sind.

Hierdurch gelingt es innerhalb einer Verpackung mit sehr wenig Platz auszukommen, d. h. es wird innerhalb der Verpackung nur wenig mehr Raum benötigt als für die Backwaren erforderlich ist, und dennoch bietet die Backschale im Ofen viel Platz für die Backwarenteile, wie z. B. für kleine gefüllte Blätterteigtaschen.

Vorzugsweise wird vorgeschlagen, dass die Außenränder der Backschalenteile jeweils zu einer Längswand hochgebogen sind. Ferner ist von Vorteil, wenn sie aus Pappe besteht. Dabei kann die Pappe ein- oder zweiseitig eine Kaschierung aufweisen. Vorzugsweise weist die Kaschierung eine Metallfolie insbesondere aus Aluminium und/oder mindestens eine Kunststoffschicht auf.

Vorteilhafterweise sind zwei oder mehr Backwaren auf den Backschalenteilen legbar. Auch kann die Backschale im verpackten Zustand zusammen mit der/den Backware(n) von einer Folie allseitig umgeben sein.

Besonders vorteilhaft ist ein Verfahren zum Verpacken und Ausbacken von Lebensmitteln, insbesondere Backwaren, wobei ein oder mehrere Lebensmittel auf eine Backschale gelegt werden. Deren Bodenbereiche überdecken einander und werden nach dem Entfernen der Verkaufspackung nebeneinander gelegt und die Backwaren werden darauf gelagert, um dann gemeinsam mit den Backschalenteilen auf einem Backblech in den Backofen geschoben und gebacken bzw. fertig gebacken zu werden.

Zwei Ausführungsbeispiele der Erfindung sind in den Zeichnungen perspektivisch dargestellt und werden im Folgenden näher beschrieben. Es zeigen
- Fig. 1: eine zweigeteilte Backschale mit übereinander liegendem Boden,
- Fig. 2: die Backschale nach Fig. 1 im ausgebreiteten Zustand,
- Fig. 3: eine Backschale mit gefaltetem Boden,
- Fig. 4: die Backschale nach Fig. 3 im ausgebreiteten Zustand.

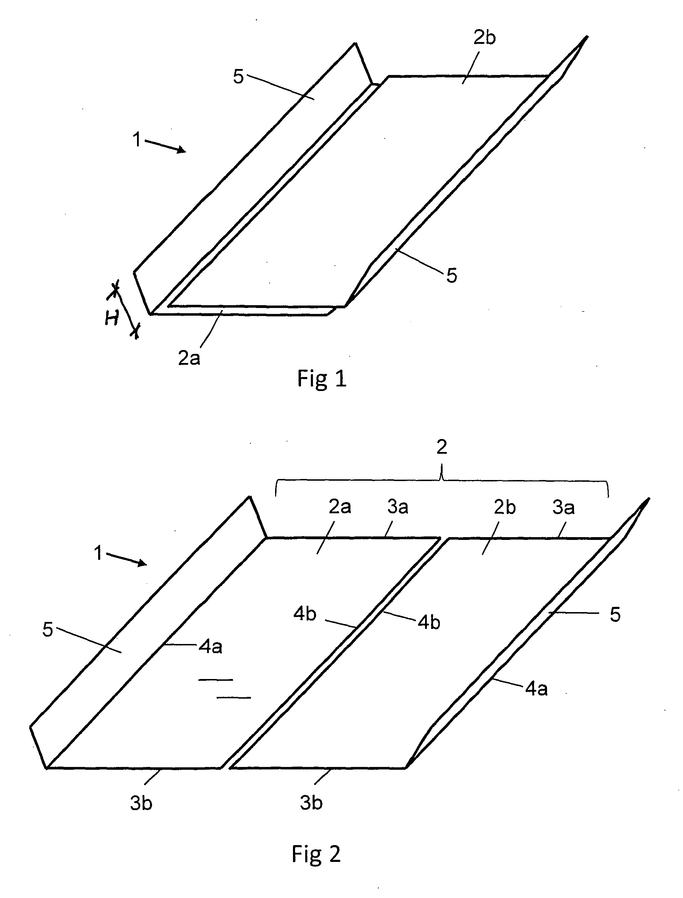

Nach den Fig. 1 und 2 ist die Backschale (Backtray) 1 zweigeteilt, wobei der rechteckige Boden 2 aus zwei gleich großen rechteckigen Teilen 2a und 2b besteht, mit jeweils zwei kurzen Rändern 3a, 3b und zwei Längsrändern 4a, 4b. An den jeweils außen befindlichen Längsrändern 4a beider Böden schließt eine streifenförmige Längswand 5 mit gleich bleibender Höhe H über die Länge des Längsrandes an, die schräg oder senkrecht hochgebogen ist.

Im eingepackten Zustand liegen die beiden Bodenteile 2a und 2b deckungsgleich übereinander, so dass die Backschale die halbe Schalenbreite aufweist. Auf dem oberen Bodenteil liegen die Backteile (insbesondere kleinformatige, insbesondere tiefgefrorene Backteile wie kleine gefüllte Blätterteigtaschen oder kleine gefüllte Brötchen) eng aneinander und beide Bodenteile und die Backteile sind von einer Folie luftdicht umgeben (als Flow Pack).

Nach dem Entfernen der umhüllenden Folie werden die beiden Bodenteile 2a, 2b dicht nebeneinander gelegt, so dass die zwei Längsränder 4b aneinander liegen und eine einzige breite Bodenfläche gebildet ist (Fig. 2), auf der die Backwaren in ausreichendem Abstand voneinander gelegt werden. Danach werden die beiden Backschalenteile auf einem Backblech in den Ofen geschoben.

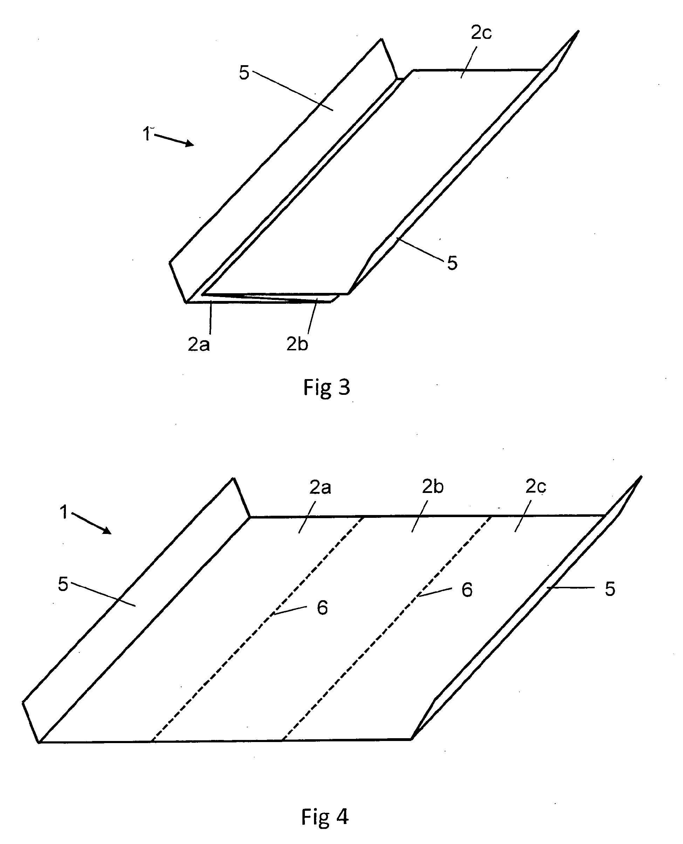

Die in Fig. 3 und 4 dargestellte zweite Ausführung unterscheidet sich von der ersten dadurch, dass der Boden 2 in drei Teile 2a, 2b, 2c gefaltet ist (mit Faltlinien 6), die im eingepackten Zustand übereinander liegen und nach dem Auspacken auseinander gefaltet werden, um auf die gesamte Bodenfläche die Backteile zu legen.

Alle Teile der Backschale 1 bestehen vorzugsweise aus kräftigem Papier insbesondere aus Pappe, wobei das Papier/die Pappe ein- oder zweiseitig kaschiert ist. Die Kaschierung ist vorzugsweise von einer Kunststoffschicht oder Kunststofffolie oder einer Metallfolie insbesondere Aluminiumfolie gebildet. Stattdessen kann es aber auch eine Kunststoffbeschichtung sein, indem z. B. PET (Polyethylenterephthalat) flüssig aufgebracht wird.

## Patentansprüche

1. Backschale (Backtray) (1) zur Aufnahme von insbesondere tiefgefrorenen Lebensmitteln wie Backwaren zum Backen oder Fertigbacken in einem Ofen, **dadurch gekennzeichnet, dass** der Boden (2) der Backschale mindestens zwei Teile (2a, 2b) bildet, die im verpackten Zustand übereinander liegen und hierbei die Backwaren tragen.

2. Backschale nach Anspruch 1, **dadurch gekennzeichnet, dass** die zwei oder mehr Teile (2a, 2b) der Backschale (2) voneinander getrennte Teile bilden, deren Trennungslinie(n) den Boden durchquert/durchqueren.

3. Backschale nach Anspruch 1, **dadurch gekennzeichnet, dass** die Teile der Backschale über Faltlinien (6) miteinander verbunden sind.

4. Backschale nach einem der vorherigen Ansprüche, **dadurch gekennzeichnet, dass** die Außenränder (4a) der Backschalenteile jeweils zu einer Längswand (5) hochgebogen sind.

5. Backschale nach einem der vorherigen Ansprüche, **dadurch gekennzeichnet, dass** sie aus Pappe besteht.

6. Backschale nach Anspruch 5, **dadurch gekennzeichnet, dass** die Pappe ein- oder zweiseitig eine Kaschierung aufweist.

7. Backschale nach Anspruch 6, **dadurch gekennzeichnet, dass** die Kaschierung eine Metallfolie insbesondere aus Aluminium und/oder mindestens eine Kunststoffschicht aufweist.

8. Backschale nach einem der vorherigen Ansprüche, **dadurch gekennzeichnet, dass** zwei oder mehr Backwaren auf den Backschalenteilen (2a, 2b) legbar sind.

9. Backschale nach einem der vorherigen Ansprüche, **dadurch gekennzeichnet, dass** die Backwaren gefüllte Blätterteigtaschen oder Brötchen sind.

10. Backschale nach einem der vorherigen Ansprüche, d a **durch gekennzeichnet, dass** sie im verpackten Zustand zusammen mit der/den Backware(n) von einer Folie allseitig umgeben ist.

11. Verfahren zum Verpacken und Ausbacken von Lebensmitteln insbesondere Backwaren, **dadurch gekennzeichnet, dass** die/das Lebensmittel(n) auf eine Backschale (1) gelegt wird, von der Bodenbereiche (2a, 2b) einander überdecken, und dass nach dem Entfernen der Verpackung insbesondere der Verpackungsfolie die Bodenbereiche der Backschalenteile nebeneinander gelegt und die Backware(n) darauf gelagert wird/werden, um dann gemeinsam auf einem Backblech in den Backofen geschoben zu werden.
